# EUROPEAN PATENT APPLICATION

(11) **EP 2 241 839 A2**
(43) Date of publication of application: **20.10.2010**
(21) Application number: 10159292.1
(22) Date of filing: 08.04.2010
(51) Int. Cl.: F24F 13/02, F16L 45/00

(54) **Duct component for an air-conditioning duct, arrangement in an air-conditioning duct, and methods for manufacturing a duct component, for servicing an air-conditioning duct, and for air-conditioning work**

(30) Priority: 08.04.2009 FI 20095390
(71) Applicant: IVK-Tuote Oy, 40250 Jyväskylä (FI)
(72) Inventor: Savimäki, Mika, 41180 Vehniä (FI); Savimäki, Mikko, 41310 Leppävesi (FI)
(74) Representative: Helke, Kimmo Kalervo

(57) **Abstract**

The invention relates to a duct component for an air-conditioning duct, which includes at least one end piece (12), by means of which the duct component (10) is arranged to be attached to an air-conditioning duct, a jacket (11) attached to the end piece, and in which duct component (10) there is an opening (19), which is closeable with a cover (20.1, 20.2). The jacket, which is attached to the end piece over only part of its circumferential length (D), is arranged to act as the said cover. In addition, the invention also relates to an arrangement in an air-conditioning duct and methods for manufacturing a duct component, for servicing an air-conditioning duct, and for air-conditioning work.

## Description

The present invention relates to a duct component for an air-conditioning duct, which includes
- at least one end piece, by means of which the duct component is arranged to be attached to an air-conditioning duct,
- a jacket attached to the end piece,
and in which duct component there is an opening, which is closeable with a cover. In addition, the invention also relates to an arrangement in an air-conditioning duct, and method for manufacturing a duct component, for servicing an air-conditioning duct, and for air-conditioning work.

An air-conditioning duct component with an opening, like that referred to above, can be attached as part of an air-conditioning duct and several operations can be performed with its aid. One example of these is sweeping an air-conditioning duct through the opening, as well as installing various kinds of device inside the duct component.

Published Swedish patent application 8005676-5 discloses a component with an angular box shape, to be placed in a duct, with a cover and possible control elements attached to it that can be removed. In terms of flow, a box is a disadvantageous shape and it can be difficult to handle the cover in cramped spaces.

Published Finnish patent application No. 75658 discloses a duct component, in which there is a removable cover with seals. The series manufacture of such a component requires cutting tools for both the cover and the body part. The tools are expensive and often even product-specific, so that they cannot be utilized to manufacture anything other than the product in question. In addition, the manufacture of the parts and the component itself requires several work stages. The handling of the cover can also be difficult in cramped spaces.

The present invention is intended to create a simple duct component for an air-conditioning duct and arrangement in an air-conditioning duct, which are simple both in construction and in manufacturing method. In addition, the invention is intended to create an easier way to service an air-conditioning duct and to do air-conditioning work. The characteristic features of the duct component according to the invention are stated in Claim 1, those of the arrangement in Claim 9, and those of the methods in Claims 11, 14, and 15.

The various embodiments of the invention have in common the fact that the cover closing the opening, or in general access to the duct, is surprisingly formed of the jacket part forming the flow duct itself, which can be openably closed. Through this, an opening need not be formed in the jacket part itself and, in addition, at the opening, the air-conditioning duct is formed of only a single unified jacket-part piece without special cover components. This substantially simplifies, for example, the sheet-metal work relating to the manufacture of a duct component or an air-conditioning duct.

One manifestation of the invention is a duct component with an opening that can be closed with a cover. The construction of the duct component is surprisingly simple, easy to use, and cheap to manufacture. When maintenance operations are performed at the point of use through the duct component, the fact that there is no separate loose cover piece means that there are no parts at all that need to be detached or installed. In addition, the duct component has good flow properties, because inside it there are, for example, no resistance/disturbance factors caused by a separate cover part.

Due to the simple construction of the duct component, several labour-intensive sub-stages are eliminated from its manufacture. There is no longer any need to stamp openings in the jacket blank of the duct component, nor is there any need to manufacture a separate cover part. In addition, the assembly of the duct component is also simplified because, as a separate cover part is entirely lacking, there is no need to install it in the jacket of the duct component, for example, which has taken place mainly using manual labour.

Various components, for example measurement connections and control dampers, can be easily installed in the duct component, without substantial additional modifications. In addition, the opening arranged in the duct component can be made surprisingly large compared to the solutions with covers according to the prior art, so that a small opening size will not interfere with operations performed through it.

A second manifestation of the invention is an arrangement in an air-conditioning duct and also a corresponding method for air-conditioning work. The arrangement and method are preeminently suitable, for example, for modifications to existing air-conditioning ducts and thus the arrangement can be easily retro-installed in them. In addition, the arrangement is also easy to construct in new building. In the arrangement, it is possible to utilize, for example end components that are, as such, known, between which a special flow-duct component that can be openably closed can be fitted, which permits access to the air-conditioning duct. The openably closeable jacket component, which can also act as a structural part of the duct component, is simple in construction and thus easy to manufacture. The arrangement can also be implemented without special end components, in which case the jacket component can be sealed to the ends of the air-conditioning duct. The arrangement will then be even simpler to manufacture.

In addition, the invention also relates to a method for servicing an air-conditioning duct. The method allows easy access to the air-conditioning duct. Correspondingly, due to the method, the closing of access is easy. The method improves the work efficiency and safety of air-conditioning duct servicing.

The other features specific to the invention will become apparent from the accompanying Claims while more advantages achieved using the invention are referred to in the description portion.

The invention, which is in no way restricted by the embodiments disclosed in the following, is described in greater detail with reference to the accompanying figures, in which
- Figure 1: shows an axonometric view of an embodiment of the duct component with the opening open,
- Figure 2: shows an axonometric view of the end of the duct component with the opening open,
- Figure 3: shows an end view of the duct component with the opening open,
- Figure 4: shows an end view of the duct component with the opening closed and one closer mechanism in an inset,
- Figures 5a and 5b: show axonometric views of the duct component with the opening closed and open,
- Figure 6: shows a second embodiment of the duct component, and
- Figures 7a and 7b: show an embodiment of the arrangement in an air-conditioning duct with the access to the air-conditioning duct open and closed.

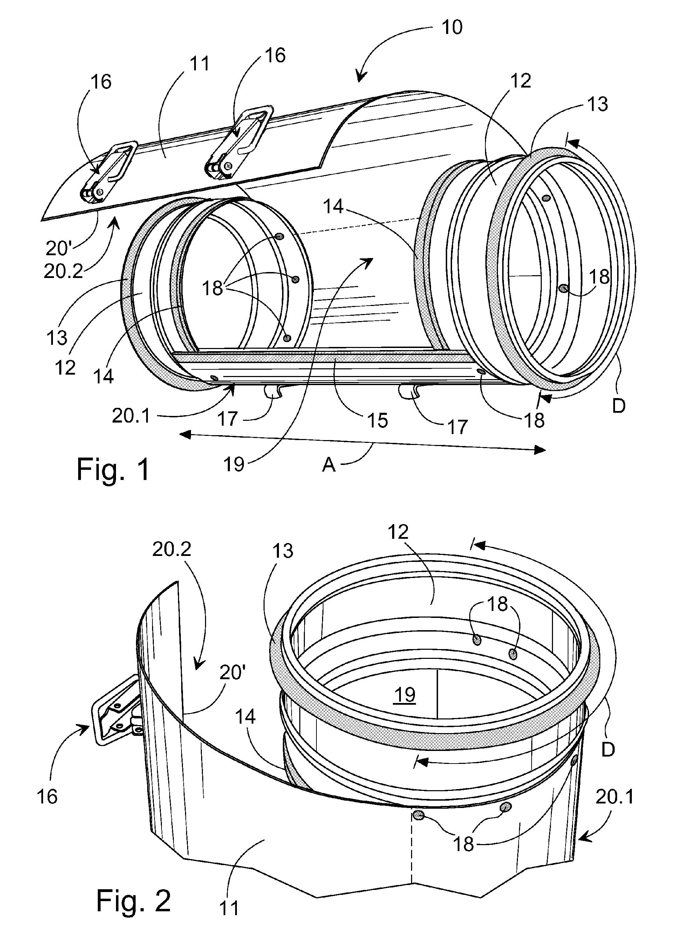

Figures 1 and 2 show one example of the duct component 10 with an opening, for an air-conditioning duct, according to the invention. The main parts of it include at least one end piece 12 and a jacket 11 attached to it.

In the embodiment of Figures 1 and 2, there are two end pieces 12, with a jacket 11 attached between them, which when closed circumferentially forms a flow duct. As such, the end pieces 12 can be known from the prior art, for example, duct connections of galvanized sheet metal. It should be noted that the configuration of the end piece 12 does not, as such, affect the basic idea of the invention in any way. The jacket 11 can be, for example, a blank of sheet-like material, for example thin sheet metal, bent between the end pieces 12. The duct component 10 can be attached by the end pieces 12 at both extreme ends to the air-conditioning duct in the axial direction A, for which purpose there are corresponding seals 13 on the outer circumference of the end pieces 12. The joint between the end pieces 12 and the air-conditioning duct can thus take place directly inside the end of the duct.

In the duct component 10, there is an opening 19, which can be closed by a cover, through which access can be gained to the interior of the duct component 10 when it is installed in an air-conditioning duct. The opening 19 that can be closed by a cover is now fitted between the end pieces 12, through which access opens into the air-conditioning duct. The jacket part 11 is now surprisingly arranged to act as the cover 20.2. In other words, the opening 19 can be formed and, on the other hand, also closed using the jacket 11 of the duct component 10, cut in the axial direction A, which is attached to the end pieces 12 only over part of its circumferential length D. In other words, the jacket 11 is unattached to the end piece 12 over at least part of its circumferential length. The jacket 11 is thus cut over its entire axial length A. The attachment length D of the jacket 11 to the end pieces 12 can be, for example, 20 - 60 % of the total circumferential length of the end pieces 12. According to one embodiment, the jacket 11 has at least two part 20.1, 20.2 in the circumferential direction of the duct component 10, i.e. a first jacket part 20.1 and a second jacket part 20.2. The axial A boundary line of the parts 20.1, 20.2 is drawn with a broken line on the jacket 11 in Figures 1 and 2. In the embodiment of Figures 1 and 2, at least one jacket part 20.2 is unattached to the end parts 12 at a distance from the circumferential end 20' of the jacket 11. In other words, the jacket part 20.2 in question is free, i.e. it is loose from the end pieces 12 at both ends of the jacket 11 in the axial direction A. Thus, using this jacket part 20.2, an opening 19 can be formed between the end pieces 12 and, on the other hand, also to close this opening 19. Thus, the free jacket part 20.2 acts as a cover for the opening 19, i.e. it forms a closable and openable hatch in the duct component 10. Correspondingly, in the circumferential direction of the jacket 11 its second part 20.1 is attached tightly to the end pieces 12 at both ends in the circumferential length D.

The free jacket part 20.2 of the duct component 10, which is flexible and in a curved formation, is, when unrestrained, free of the end pieces 12, so that the jacket part 20.2 will straighten slightly and through this form a wide opening 19 in the side of the duct component 10. Correspondingly, the remaining part 20.1 of the jacket 11 is attached to the end pieces 12, so that the duct component 10 will remain assembled as intended in the axial direction A when the opening 19 is open.

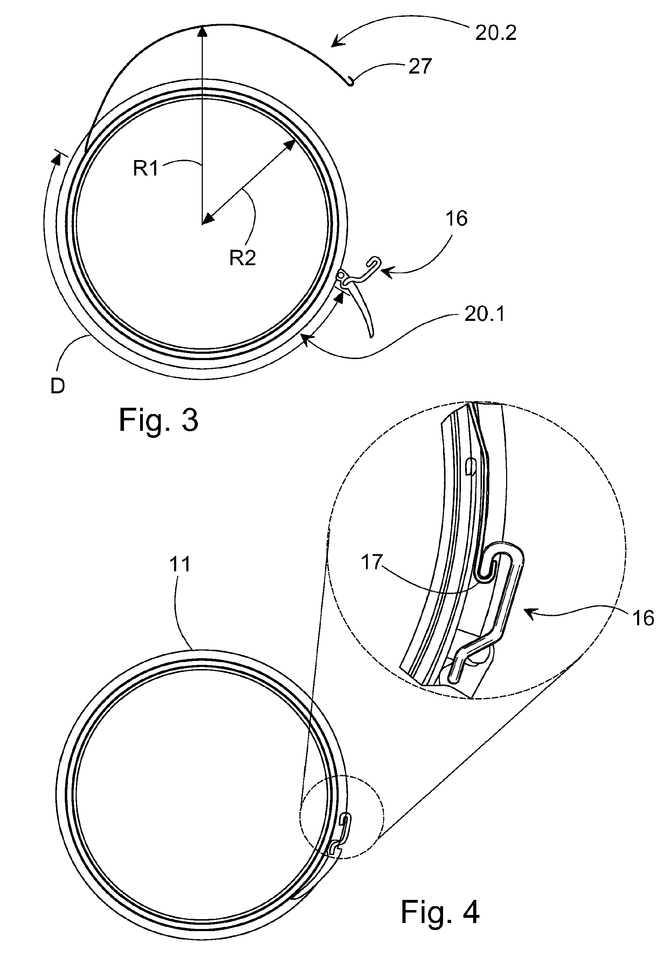

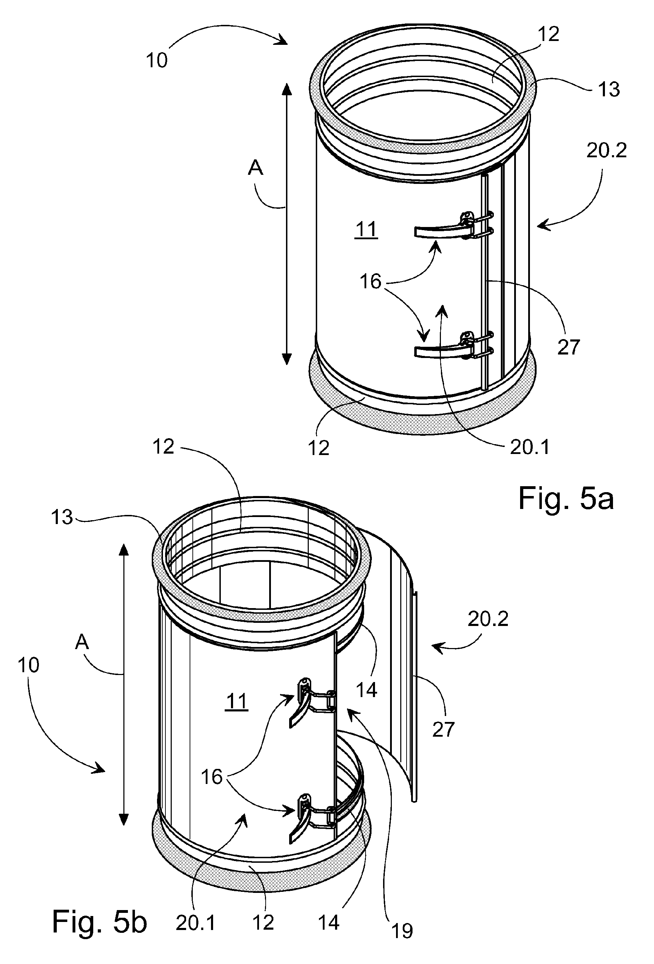

As can be easily seen from Figures 4 and 5a, when the opening 19 is closed, the cover 20.2 can be locked by joining the ends of the jacket parts 20.1, 20.2 to each other. Figures 1, 3, 4, 5a, and 5b show some possibilities for implementing openable locking. These are attachment latches 16 fitted to the parts 20.1, 20.2 of the jacket 11 and their counter hooks 17 (Figures 1 and 4) or alternatively beading 27 (Figures 3 and 5a) fitted to the jacket part 20.2 acting as the cover of the opening 19. The latches 16 can be in the free jacket part 20.2 and their counter hooks 17 close to the edge of the part 20.1 of the jacket 11 attached to the end pieces 12. The counter hooks 17 can be replaced with a beading 27 made in the opening end 20.2 of the jacket part 11, so that the construction and manufacture of the duct component 10 will be simpler than previously. The attachment latches 16 and the counter hooks 17 can also be placed the other way round. The latch-counterpiece locking 16, 17, 27 is easy to open and close in difficult and high air-conditioning duct positions, where the duct component 10 is usually situated. In addition, loose and easily lost parts are not used at all in the locking of the cover 20.2. Separate locking elements are, of course, possible.

When attached to each other, the parts 20.1, 20.2 of the jacket 11 can overlap for a distance. The axial joint, which is then formed inside the tube 10, has practically no disturbing effect of the flow through the tube 10.

As can be seen from Figures 1 and 2, innermost seals 14 are fitted to the outer circumference of the end pieces 12, in order to ensure the tightness between the jacket 11 and the end pieces 12. When the opening 19 is closed by the cover formed by the jacket part 20.2, the jacket part 20.2 presses over its entire length against the sealing rings 14 of the end pieces 12. When the seals 14 are in the end pieces 12, the cover 20.2 is provided with reliable sealing. In addition, the seals 14 will remain in place well, especially if they are integrated in the edging of the end pieces 12. Of course, it is also possible for at least some of the seals 14 to be fitted to the jacket part 11.

Figure 1 shows an axial A sealing arrangement 15 fitted in connection with the parts 20.1, 20.2 of the jacket 11 in connection with their joint area. Now, the sealing arrangement includes an axial sealing strip 15 fitted to part 20.1 attached to the end pieces 12 of the jacket 11. By means of it, the duct component 10 is sealed in connection with the joint of parts 20.1, 20.2 of the jacket 11. In this case too, it is possible to exploit the edging of part 20.1 to attach the seal 15.

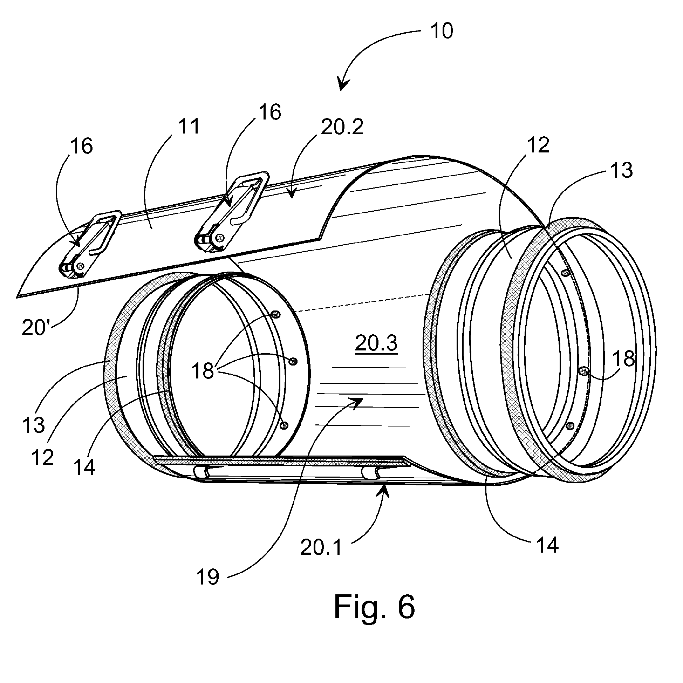

Above, the invention is described in the form of an embodiment, in which one part 20.2 of the jacket 11 is circumferentially at a distance from the end pieces 12 and the opposite piece 20.1, being the other end of the jacket 11 in the circumferential direction, is attached to the end pieces 12. Figure 6 shows a second embodiment of the invention. As can be seen from Figure 6, it is also possible for both jacket parts 20.1, 20.2 that settle opposite to each other when the opening 19 is closed to be separate from the end pieces 12, in which case the opening 19 can be made even larger than before, or at least the jacket areas 20.1, 20.2 forming the cover of the opening 19 straighten, so that they farther out of the road of the opening 19. The jacket 11 will then be closed to the end pieces 12 in the central area 20.3 in the circumferential direction.

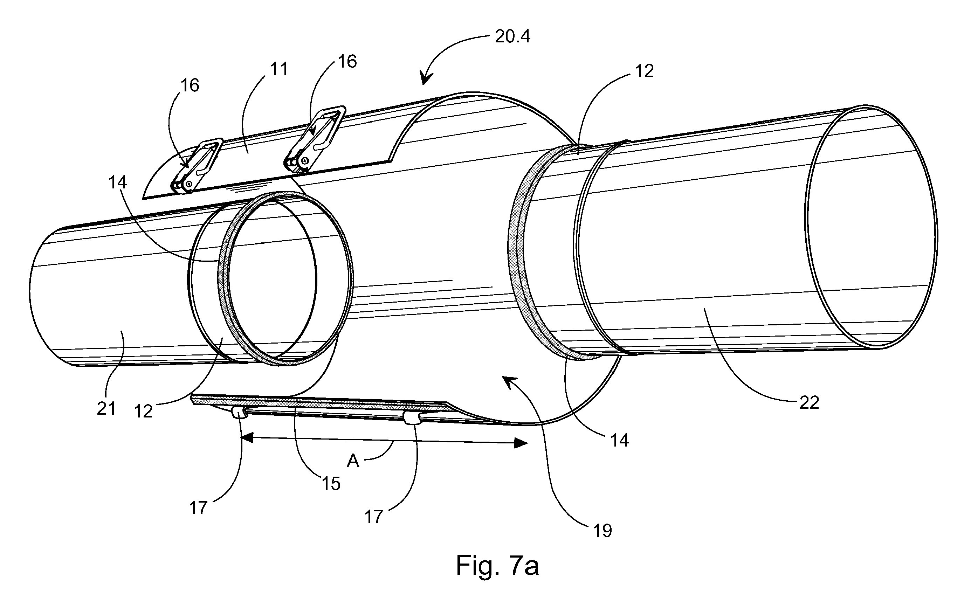

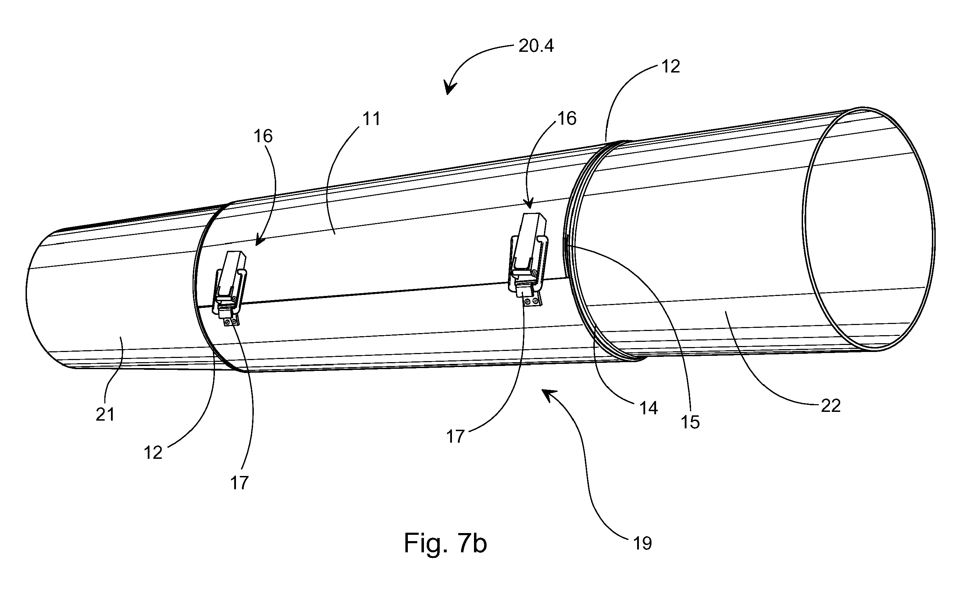

The above manifestation of the invention has been in the form of a duct component 10. As can be seen from Figures 7a and 7b, the invention equally also relates to an arrangement in an air-conditioning duct 21, 22, which includes an opening 19 that can be closed with a cover 20.4, more generally to access to an air-conditioning duct 21, 22. Thus, the same inventive idea, i.e. a jacket part 11 of a flow duct that can be opened and closed and which forms a cover 20.4 for an opening 19, can be implemented in the form of a duct component 10, as a compact integrated structure to be installed in an air-conditioning duct, or alternatively also in the form of an arrangement of separate detached components, which can be implemented in an even more simplified form than the separate duct component 10.

The arrangement includes two air-conditioning ducts 21, 22, which are separate from each other and between which access 19 to the air-conditioning duct 21, 22 is arranged to be formed. In addition, the arrangement also includes a jacket part 11 that is openably closeable and which connects the air-conditioning ducts 21, 22. Sealed to the air-conditioning ducts 21, 22, the jacket part 11 is arranged to close access 19 to the air-conditioning duct 21, 22 and thus to form a cover 20.4 for the opening 19.

According to one embodiment, the air-conditioning ducts 21, 22 can be equipped with two ends 12 fitted at a distance from each other, which are separate from each other. Thus, the ends 12 can be part of the air-conditioning duct 21, 22. Because the ends 12 are separate from each other, the air-conditioning duct 21, 22 can be said to be cut, in order to form an opening 19 in, or more generally access to the air-conditioning duct 21, 22. Thus open access 19 to the air-conditioning duct 21, 22 is created throughout between the end 12 that are opposite to each other and at a distance from each other. In other words, the gap between the ends 12 is a free gap in the duct, which is open throughout, as a result of which opening into the air-conditioning 21, 22 opens through the ends 12. The ends 12 can be implemented, for example, by means of end components 12 with seals 14 fitted to the air-conditioning duct 21, 22 into both sides of the opening 19 like described in connection with the duct component 10, or even without them. In that case, the seals 14 will be arranged in connection with the ends of the air-conditioning ducts 21, 22.

A separate openably closeable jacket part 11, which forms the flow duct, can be fitted between the ends 12. In other words, the jacket part 11 is not attached to the air-conditioning ducts 21, 22 nor to their ends 12, so that it can be entirely removed from connection with the air-conditioning ducts 21, 22 if desired. When installed, and thus also sealed to the air-conditioning ducts 21, 22, or to the end pieces 12 arranged in them, the jacket 11 closes access 19 to the air-conditioning duct 21, 22. In other words, the jacket 11 then connects the end pieces 12 and the tube components 21, 22 to each other and forms a closed flow duct between the consecutive tube components 21, 22 in the flow direction, acting at the same time as a cover 20.4 for the opening 19. When installing the jacket 11, it is opened, i.e. it does not then form a rotationally closed piece, but instead there is in the jacket surface 11, for example, an axial cut, which extends in the application of the jacket 11 from one end to the opposite end in the flow direction of the duct.

The invention also relates to a method in air-conditioning work, in which access 19 that can be openably closed is arranged in an air-conditioning duct 21, 22, in order to create an arrangement like that described above. One way to implement this is to arrange two air-conditioning ducts 21, 22 separately from each other, so that access 19 to the air-conditioning duct 21, 22 is formed between them. For this purpose, the air-conditioning ducts 21, 22 can be equipped, for example, with two ends 12 arranged at a distance from each other, in such a way that access 19 to the air-conditioning duct 21, 22 is created between them.

Next, the air-conditioning ducts 21, 22 separate from each other can be connected by means of a flow-duct part 11 with an openably closable jacket. The flow-duct part 11 closes access 19 to the air-conditioning duct 21, 22 sealed in the air-conditioning duct 21, 22. The flow-duct part 11 can be easily constructed, for example, between the ends 12. Thus, the arrangement can be easily constructed, for example, in a new-building project when constructing the air-conditioning system, or also in existing air-conditioning. In that case, a length of the existing air-conditioning duct is cut away, possible end pieces 12 equipped with seals are attached to the ends of the ducts 21, 22 created, and a flow-duct part 11 with an openably closable jacket is installed between the ducts 21, 22. Of course, the seals 14 can also be arranged directly in the ends of the ducts 21, 22 without the end pieces 12. Cutting away a length of duct is a very simple procedure compared, for example to the procedure of the prior art, in which the curved jacket surface of the duct is cut to form an opening. It should be noted, that Figures 7a and 7b do not show the suspension of the air-conditioning ducts 21, 22 at all.

The invention also relates equally to a structural part for a duct component 10 or an arrangement, which part is a pre-bent sheet-like flow-duct piece 11. Attachment elements 16 and their counter elements 17 are fitted to the opposing edges 20' of the structural part 11 in its bending direction, in order to form a closed channel with the jacket. A cover structure, which can be opened and closed, formed from such a structural part 11 can be exploited, for example, in the duct component 10 or arrangement according to the invention.

The invention also relates to a method for manufacturing a duct component 10 with an opening. The duct component 10 can be manufactured, for example, in such a way that the jacket part 11 is attached to at least one end piece 12 using a selected attachment method and a opening 19 that can be closed using a cover 20.2 is arranged in the duct component 10. Again, there can also be two end pieces 12, between which the jacket part 11 and the opening 19 are arranged. The stages can also be performed in a selected sequence, which is in no way restricted by the basic idea of the invention. When attaching the jacket part 11 to at least one end piece 12, it is attached to it only over part of the circumferential length D. Thus, when installed in its operating location, the jacket 11 of the duct component 10 form a cover 20.2 for the opening 19. The length of the jacket area 20.1 containing the joints 18 can be, for example, 20 - 60 % of the circumference of the end piece 12.

Examples of the methods for attaching the jacket 11 to the end pieces 12 are spot welding 18, seam welding, or some other attachment procedure either known or still under development. The jacket blank 11 can be first of all welded to one end piece 12, after which a welded joint 18 can also be made at the other end of the duct component 10. In mechanized manufacture, both ends 12 can be attached simultaneously. The direction of welding can either start from the jacket part 20.2 forming the cover, or terminate there (the axial A broken line in the jacket 11 in Figures 1 and 2).

The bending radius R1 of the jacket piece 11 before attachment to the end pieces 12 can be greater than the curve radii R2 of the end pieces 12. Thus, the jacket piece 11 can be pre-bent. This ensures that the part 20.2 forming and closing the opening 19 of the jacket 11 will remain free, being sure to be separate from the end pieces 12 and not in the road when operating through the opening 19. On the other hand, the jacket 11 can also be mainly straight prior to be attached to the end pieces 12. It is then forced against the end piece 12 only in the welding stage and then acquires a curved shape. In order to facilitate welding, the jacket part 20.1 to be welded can be bent into a tighter curve than that of the part 20.2 of the jacket part 11 forming the cover. The attachment latches 16 and counter hooks 17 can also be attached to the jacket part 11 by spot welding, or some other attachment method.

The invention also relates to a method for servicing an air-conditioning duct, in which access to the duct component 10 is through the opening 19. The method is described with reference to Figures 5a and 5b. Figure 5a shows a duct component 10 with a closed jacket 11. An opening 19, which is formed between the end pieces 12, more generally stated in the duct component 10, is arranged in the duct component 10. The opening is arranged in such a way that at least one part 20.2 of the jacket 11 cut in the axial direction A is released from the closed state. When the attachment latches 16 are opened, the jacket part 11 springs open. The jacket part 20.2 then separates from the end pieces 12. In other words, when the cover 20.2 is opened, the jacket 11 forming the cover 20.2 straightens spontaneously at least partly. In addition, the jacket 11 can be bent to separate from the ends 12 even before it opens spontaneously by its own force. Figure 5b shows the duct component 10, in which there is an opening 19, which permits access inside the duct component 10.

In the open position of the duct component 10 shown in Figures 3 and 5b, the radius R1 of the curve of the jacket portion 20.2 of the jacket 11, separated from the end pieces 12, is greater than the curve radii R2 of the end pieces 12. Thus, a wide opening 19 forms between the free jacket part 20.2 and the fixed jacket part 20.1, which can be used, for example, for sweeping / examining the duct runs and installing / removing / replacing / servicing / adjusting devices, i.e. more generally stated for servicing air-conditioning ducts.

Once the servicing operations have been performed, the opening 19 is closed. The free jacket part 20.2 is then bent by pressing on it with the hands towards the end pieces 12 and the fixed jacket part 20.1 attached to them. The jacket 11 is suitably flexible, so that it can be bent shut with the force of the hands, but nevertheless sufficiently stiff in terms of the strength of the duct component 10. A suitable material thickness is selected according to the size of the duct component 10.

When the jacket 11 is pressed, the edges of the free jacket part 20.2 reach a position conforming to the end components 12 and its innermost seals 14 and the sealing strip 15 of the jacket part 20.1 fixed at its ends. In this position, it can be locked by the attachment latches 16 to the counter hooks 17 of the fixed part 20.1 of the jacket 11, or to the beading 27 of the jacket part 20.2. Through the locking, the jacket part 20.2 is also brought tightly against the end pieces 12 and again forms a closed and tight jacket arrangement, so that air can circulate through the duct component 10.

According to yet another embodiment, a duct component 10 arranged for commercial exchange can even be implemented in such a way that only one end piece 12 is attached to the jacket part 11 circumferentially incompletely according to the invention. In that case, the second end piece 12 with its seals 14 opposite to the first end piece can be installed directly, for example, in an air-conditioning duct 22, as shown in the application of Figures 7a and 7b. Thus, the duct component 10 is only sealed to this duct component 22 and not attached at all. Correspondingly, the duct component 10 with a jacket is installed at the end of the air-conditioning duct 21 opposite to the end piece 12.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one versed in the art.

## Claims

1. Duct component for an air-conditioning duct, which includes
- at least one end piece (12), by means of which the duct component (10) is arranged to be attached to an air-conditioning duct,
- a jacket (11) attached to the end piece (12),
and in which duct component (10) there is an opening (19), which is closable with a cover (20.1, 20.2), **characterized in that** the jacket (11), which is attached to the end piece (12) over only part of its circumferential length (D), is arranged to act as the said cover (20.1, 20.2).

2. Duct component according to Claim 1, **characterized in that** the duct component (10) includes two end pieces (12), between which the said jacket (11) acting as the cover (20.1, 20.2) of the opening (19) is fitted by attaching it to the end pieces (12) over only part of the circumferential length (D).

3. Duct component according to Claim 1 or 2, **characterized in that**, in the circumferential direction of the duct component (10), the jacket (11) has at least two parts (20.1 - 20.3), of which at least one part (20.1, 20.2) is arranged to act as a cover of the opening (19) unattached to the end pieces (12).

4. Duct component according to Claim 3, **characterized in that,** when closing the opening (19), the cover (20.1, 20.2) is arranged to be locked with the aid of attachment latches (16) and their counter hooks (17) or of a beading (27) fitted to the parts (20.2, 20.2) of the jacket (11).

5. Duct component according to any of Claims 1 - 4, **characterized in that** seals (14) are fitted to the end pieces (12), in order to ensure tightness between the jacket (11) and the end pieces (12).

6. Duct component according to any of Claims 1 - 5, **characterized in that** a sealing arrangement (15) is fitted in connection with the parts (20.1, 20.2) of the jacket (11), in order to seal the cover (20.1, 20.2) of the duct component (10) in the axial direction (A).

7. Duct component according to any of Claims 1 - 6, **characterized in that** the attachment length (D) of the jacket (11) to the end pieces (12) is 20 - 60 % of the circumferential length of the end pieces (12).

8. Duct component according to any of Claims 1 - 7, **characterized in that** the jacket (11) arranged to form a cover (20.1, 20.2) is arranged to straighten spontaneously when the cover (20.1, 20.2) is open.

9. Arrangement in an air-conditioning duct, which includes access (19) that can be closed, **characterized in that**, the arrangement includes
- two air-conditioning ducts (21, 22), which are separate from each other and between which the access (19) is arranged to be formed to the air-conditioning duct (21, 22),
- a jacket part (11) that connects the air-conditioning ducts (21, 22) and can be openably closeable, which when sealed to the air-conditioning ducts (21, 22) is arranged to close the access (19) to the air-conditioning duct (21, 22).

10. Structural part for the duct component (10) according to any of Claims 1 - 8 or the arrangement according to Claim 9, **characterized in that** the structural part is a pre-bent sheet-like piece (11), to the opposite edges (20') of which in the bending direction attachment elements (16) and their counter elements (17) are fitted to form a closed duct.

11. Method for manufacturing a duct component (10) with an opening, in which
- a jacket (11) is attached to at least one end piece (12),
- an opening (19) that can be closed by a cover 20.1, 20.2) is arranged in the duct component (10), **characterized in that** the jacket (11) is attached to at least one end piece (12) over only part of the circumferential length (D), in such a way that at the operating location the jacket (11) of the duct component (10) forms a cover (20.1, 20.2) for the said opening (19).

12. Method according to Claim 11, **characterized in that** the bending radius (R1) of the jacket (11) before attachment to the end piece (12) is greater than the radius (R2) of the curve of the end piece (12).

13. Method according to Claim 11 or 12, **characterized in that**, before attaching to the end piece (12), the jacket (11) is mainly straight.

14. Method in air-conditioning work, in which openably closable access (19) is arranged in an air-conditioning duct (21, 22), **characterized in that**
- two air-conditioning ducts (21, 22) are arranged separately from each other, so that access (19) to the air-conditioning duct (21, 22) is formed between them,
- the air-conditioning ducts (21, 22) are connected by a flow-duct component (11), the jacket of which is openably closable, which when sealed to the air-conditioning duct (21, 22) closes access (19) to the air-conditioning duct (21, 22).

15. Method for servicing an air-conditioning duct, in which
- an opening (19), which is formed between end pieces (12), is arranged in a duct component (10) with a closed jacket (11),
- the servicing operations are performed,
- the opening (19) is closed,
**characterized in that** the opening (19) is arranged by releasing at least one part (20.1, 20.2) of the jacket (11), which is cut in the axial direction (A), from the closed jacket position, in which case the part (20.1, 20.2) separates from the end pieces (12) and permits access inside the duct component (10).
